# EUROPÄISCHE PATENTSCHRIFT

(11) **EP 3 764 655 B1**
(45) Veröffentlichungstag und Bekanntmachung des Hinweises auf die Patenterteilung: **01.03.2023**
(21) Anmeldenummer: 20181034.8
(22) Anmeldetag: 19.06.2020
(51) Int. Cl.: H04Q 9/00, G01D 4/00

(54) **VERFAHREN ZUM DRAHTLOSEN ÜBERTRAGEN VON ZEITKRITISCHEN DATEN, INSBESONDERE ALARMDATEN, EINES BATTERIEBETRIEBENEN ZÄHLERS**
METHOD FOR WIRELESS TRANSMISSION OF TIME-CRITICAL DATA, IN PARTICULAR ALARM DATA, OF A BATTERY-OPERATED METER
PROCÉDÉ DE TRANSMISSION SANS FIL DE DONNÉES TEMPORELLEMENT CRITIQUES, EN PARTICULIER DES DONNÉES D'ALARME, D'UN COMPTEUR À BATTERIE

(30) Priorität: 11.07.2019 DE 102019004872
(43) Veröffentlichungstag der Anmeldung: 13.01.2021
(73) Patentinhaber: Diehl Metering Systems GmbH, 90451 Nürnberg (DE)
(72) Erfinder: Kvesic, Adrian, 90766 Fürth (DE); Joppich-Dohlus, Petra, 91080 Rathsberg (DE); Schmidt, Christoph, 90403 Nürnberg (DE); Schmitz, Stefan, 90455 Nürnberg (DE); Jambor, Christian, 90449 Nürnberg (DE)
(74) Vertreter: Diehl Patentabteilung

(56) Entgegenhaltungen:
- EP-A1- 3 474 563
- US-A1- 2014 028 470
- US-A1- 2019 025 078

## Beschreibung

Die vorliegende Erfindung betrifft ein Verfahren zum drahtlosen Übertragen von zeitkritischen Daten, insbesondere Alarmdaten, eines batteriebetriebenen Zählers, vorzugsweise Verbrauchszählers, gemäß dem Oberbegriff des Anspruchs 1.

### Technologischer Hintergrund

Bei den hier interessierenden Zählern handelt es sich um Erfassungsgeräte einzelner verschiedener Versorgungsarten im Haushalt, wie z.B. Strom, Kaltwasser, Warmwasser, Wärme sowie Gas. Derartige Zähler werden üblicherweise ortsfest eingebaut und generieren Zählerdaten, die von einem üblicherweise für mehrere Zähler vorgesehenen Datensammler bzw. Konzentrator empfangen und an ein Head-End weitergegeben werden, in dem die Zählerdaten der Zähler verwaltet und ausgewertet werden. Zähler werden üblicherweise energieautark betrieben und umfassen aus diesem Grund als Energiequelle eine Batterie, deren Lebensdauer gleichzeitig die Betriebsdauer des Zählers festlegt. Um die Betriebsdauer des Zählers möglich lange zu erhalten, besteht ein besonderes Interesse daran, den Energieverbrauch des Zählers möglichst niedrig zu halten.

Aus diesem Grund werden Zählerdaten vom jeweiligen Zähler nicht permanent, sondern lediglich zu bestimmten Zeitpunkten an den Datensammler übertragen. Zur Übertragung wird demzufolge an festgelegten Zeitpunkten eine Drahtloskommunikationsverbindung über bestimmte Zeitintervalle aufgebaut. Bei einem plötzlichen Eintritt eines zeitkritischen bzw. außergewöhnlichen Ereignisses, also eines Ereignisses, dessen Relevanz einer sofortigen Mitteilung bedarf, bestand bisher das Problem, dass hierfür bisher lediglich eine Übertragung zu den vorher festgelegten Zeitpunkten möglich war. Daraus resultierte der Nachteil, dass zeitkritische Ereignisse nicht ausreichend zeitnah erkannt und dementsprechend nicht schnell genug bearbeitet werden konnten.

Unter einem zeitkritischen Ereignis wird vorliegend ein Ereignis verstanden, welches Anlass für eine Alarmauslösung geben kann, beispielsweise ein Manipulationsversuch am Zähler, eine sich plötzlich einstellende Situationsveränderung in Bezug auf die Versorgungsart, wie beispielsweise ein Wasserrohrbruch oder eine anderweitige Störung am Zähler und/oder am Versorgungsnetzwerk usw. Derartige zeitkritische Ereignisse erfordern somit eine möglichst zeitnahe Erfassung, um ein rasches Handeln zu ermöglichen oder dies zumindest entsprechend zeitnah dokumentieren zu können. Eine zeitnahe Erfassung steht jedoch in einem Spannungsverhältnis zu einem möglichst geringen Energieverbrauch des mit einer Batterie langzeitenergieautark betriebenen Zählers bzw. eines entsprechend betriebenen Datensammlers.

### Druckschriftlicher Stand der Technik

Die EP 1 837 633 A1 betrifft eine Einrichtung zum Erfassen und Signalisieren eines Lecks in einer gebäudeseitig verlegten Rohrleitung. Hierbei kommuniziert ein Verbrauchszähler, der über Leckerfassungsmittel verfügt, über Funk mit einem Empfänger, welcher über eine Leitungsverbindung mit einer weiteren Funksende- und Empfangseinrichtung mit Signalgeber kommuniziert. Die Funksende- und Empfangseinrichtung kommuniziert mit weiteren entsprechenden identischen Einrichtungen per Funk, wodurch ein Netzwerk zur multiplen Alarmsignalabgabe in verschiedenen Gebäudebereichen geschaffen wird.

Aus der WO 2016/166127 A1 ist eine Vorrichtung und ein Verfahren zur Übertragung von Verbrauchsdaten eines Verbrauchszählers in einem Funkkommunikationssystem bekannt, welches eine Mehrzahl von Endpunkten aufweist, die über Datenübertragungseinheiten mit einem Datensammler und dieser wiederum mit einem Datenverwaltungssystem über Funk in Verbindung stehen. Hierbei legt das Datenverwaltungssystem für wenigstens einen Endpunkt einen Kommunikationsweg zwischen dem wenigstens einen Endpunkt und dem Datensammler in Abhängigkeit äußerer Parameter in einem Aktivierungstelegramm fest und überträgt dieses an den Datensammler, wobei entlang des Kommunikationswegs Informationen zu äußeren Parametern gesammelt und an das Datenverwaltungssystem übermittelt werden. Die Datenübertragungseinheit sendet hierzu in vorgegebenen zeitlichen Abständen ein Empfangsbereitschaftstelegramm mit Identifizierungsinformationen aus, um eine Datenempfangsbereitschaft zu signalisieren, wobei die Datenübertragungseinheit nach dem Absenden des Empfangsbereitschaftstelegramms in einen zeitlich begrenzten Empfangsmodus wechselt, in welchem sie bereit ist, das Aktivierungstelegramm von einer benachbarten Datenübertragungseinheit oder vom Datensammler zu empfangen.

EP 1 850 500 betrifft ein Datenerfassungs- und Steuerungssystem mit Datenübertragung über Funkstrecken und elektrische Energieverteilnetze und Verfahren hierzu. Zählerdaten sowie Alarminformationen werden hierbei über Stromversorgungsleitungen sowie Ankoppelmodule in ein Kommunikationsgateway eingespeist.

Die US 2019/0025078 A1 beschreibt eine Smart Meter zur Gewährleistung eines adaptiven Service Levels. Die Kommunikationstechnologie beruht auf dem sogenannten "Wireless M-Bus", der eine bidirektionale drahtlose Kommunikation nach dem Listen After Talk (LAT) ermöglicht. Hierbei werden vom Smart Meter autonom initiierte Aussendungen von Datenpaketen vorgenommen, die Verbrauchsdaten oder auch Alarmmitteilungen beinhalten können. Gemäß einer Variante können auch kürzere Datenpakete ohne Daten vom Smart Meter versendet werden, die lediglich dazu dienen, aufzuzeigen, dass das Smart Meter nach der Aussendung dieser besonderen Datenpakete Empfangsfenster öffnet.

In der US 2014/0028470 A1 wird ein Verfahren zum Empfang von per Funk übertragenen Daten durch einen Datensammler beschrieben, bei dem Daten zu Zeiten eines geringeren Daten Traffic im Push Mode des Datensammlers und zu Zeiten eines erhöhten Daten Traffic Daten im Pull Mode des Datensammlers versendet werden. Zur Übertragung von priorisierten Daten kann der Datensammler kurzzeitig von dem Pull Mode in einen zeitbegrenzten Push Mode Zyklus wechseln, wodurch priorisierte Daten im Datensammler schneller detektiert werden können. Der Pull Mode ist zeitlich fest vorgegebenen, beispielsweise täglich zu einer bestimmten Tageszeit oder wöchentlich an einem bestimmten Wochentag. Sobald der Datensammler in dem Pull Mode Zyklus ist, beginnt der Datensammler Daten von den in Reichweite befindlichen Knoten einzusammeln. In diesem Zustand kann der Datensammler z. B. nach einer vorbestimmten Zeitspanne kurzzeitig in den Push Mode wechseln, in dem er priorisierte Daten erhalten kann.

### Aufgabe der vorliegenden Erfindung

Die Aufgabe der vorliegenden Erfindung besteht darin, ein gattungsgemäßes Verfahren zur Verfügung zu stellen, mit dem ein zeitaktuelles Erfassen zeitkritischer Zustände bei minimiertem Energieverbrauch möglich ist.

### Lösung der Aufgabe

Die vorstehende Aufgabe wird durch die Merkmale des Anspruchs 1 gelöst. Zweckmäßige Ausgestaltungen des Verfahrens werden in den abhängigen Ansprüchen beansprucht.

Dadurch, dass gemäß dem erfindungsgemäßen Verfahren neben ersten Advertising Events, die für einen Kommunikationsaufbau zwischen Zähler und Drahtloskommunikationsmodul zur Übertragung der Zählerdaten vorgesehen sind, zweite Advertising Events zum Einsatz kommen, können zeitkritische Daten, insbesondere Alarmdaten, unabhängig von der Übertragung der Zählerdaten nach Auftreten eines zeitkritischen unvorhergesehenen Ereignisses durch einen schnellen und reibungslosen Aufbau einer Drahtloskommunikation übertragen werden. Bei den Advertising Events handelt es sich um Aufmerksamkeitshinweise, d.h. Datenpakete, die ausgesendet werden, um anderen Kommunikationsteilnehmern zu ermöglichen, diese zu empfangen (scannen) und hierdurch eine Drahtloskommunikationsverbindung aufzubauen. Vorzugsweise handelt es sich bei den zweiten Advertising Events um sogenannte "directed" Advertising Events, also solche, die eine Adresse durch den diese initiierenden Kommunikationsteilnehmer beinhalten.

Vorzugsweise werden die zweiten Advertising Events periodisch ausgesendet, beispielsweise in einem Minutentakt. Diese zweiten Advertising Events kennt die Gegenstelle als speziellen "Hinweis" zum Aufbau eines drahtlosen Kommunikationskanals für die Übermittlung der zeitkritischen Daten und scannt die Umgebung in Bezug auf das Eingehen solcher zweiten Advertising Events. Werden zweite Advertising Events erfasst, wird eine Drahtloskommunikation zur Übertragung der zeitkritischen Daten aufgebaut.

Die Periodizität der zweiten Advertising Events ist höher als diejenige der ersten Advertising Events. Hierdurch wird eine zeitaktuelle Erfassung und Übermittlung der zeitkritischen Daten ermöglicht.

Gemäß einer besonderen Ausgestaltung der Erfindung werden die zweiten Advertising Events lediglich über einen begrenzten Zeitraum ausgesendet. Sofern innerhalb dieses Zeitraums kein zeitkritisches Ereignis eintritt, wird das Aussenden desselben wieder eingestellt. Hierdurch kann elektrische Energie zusätzlich eingespart werden.

Vorzugsweise werden die Zählerdaten vom Zähler an das Drahtloskommunikationsmodul in Datenaustauschintervallen also jeweils zu festgelegten Zeitpunkten gesendet. Es findet somit lediglich zu bestimmten Zeitpunkten, beispielsweise alle 15 Minuten, eine Übertragung der Zählerdaten vom Zähler an das Drahtloskommunikationsmodul statt. Zwischen diesen Datenaustauschintervallen kann zweckmäßigerweise das Aussenden der zweiten Advertising Events erfolgen.

Das Aussenden kann entweder über die gesamte Dauer oder vorzugsweise lediglich über eine Teildauer innerhalb der Datenaustauschintervallen erfolgen, was aus energetischen Gesichtspunkten zu bevorzugen ist.

Im Rahmen des erfindungsgemäßen Verfahrens agiert der Zähler als Master sowie das Drahtloskommunikationsmodul als Slave oder umgekehrt.

Agiert der Zähler als Master nimmt er eine "zuhörende (Listen) Rolle" ein, während das Drahtloskommunikationsmodul als Slave die zweiten Advertising Events aussendet. Beim Eintreten eines zeitkritischen Ereignisses beim Zähler schaltet dieser sein vorher deaktiviertes Funk-Interface ein. Es wird eine Drahtloskommunikationsverbindung zwischen Zähler und dem Drahtloskommunikationsmodul aufgebaut und die zeitkritischen Daten werden vom Zähler an das Drahtloskommunikationsmodul übertragen. Hierdurch kann schnell und reibungslos ein Drahtloskommunikationsaufbau beim Eintreten eines Alarmfalles ermöglicht werden. Gleichzeitig wird die Batterie des Zählers und Drahtloskommunikationsmodul geschont.

Alternativ kann für den Aufbaus des Drahtloskommunikationskanals zur Übertragung von zeitkritischen Daten auch ein Rollentausch zwischen Zähler und Drahtloskommunikationsmodul stattfinden. Hierbei kommt dem Drahtloskommunikationsmodul eine "zuhörende (Listen) Rolle" zu, indem dieses und nicht der Zähler seine Umgebung nach zweiten Advertising Events scannt. Beim Eintreten eines zeitkritischen Ereignisses beim Zähler werden zweite Advertising Events von Letzterem ausgesendet, beim Empfangen von zweiten Advertising Events durch das Drahtloskommunikationsmodul wird eine Drahtloskommunikationsverbindung zwischen Zähler und Drahtloskommunikationsmodul aufgebaut und die zeitkritischen Daten werden vom Zähler an das Drahtloskommunikationsmodul übertragen.

In letzterem Fall werden zweite Advertising Events vom Zähler lediglich dann versendet, wenn ein zeitkritisches Ereignis, welches als solches zählerseitig eingestuft worden ist, stattgefunden hat. Auch bei dieser Ausgestaltung dienen die zweiten Advertising Events als "Hinweis" für das Drahtloskommunikationsmodul, dass ein Drahtloskommunikationskanal aufgebaut werden soll.

Zur Festlegung der Zeitpunkte des Aussendens bzw. Empfangs der zweiten Advertising Events ist es vorteilhaft, wenn sich Zähler und Drahtloskommunikationsmodul, vorzugsweise bei jedem Kommunikationsaufbaus zum Übertragen der Zählerdaten, gegenseitig synchronisieren.

Sofern keine ersten sowie zweiten Advertising Events vom Zähler bzw. von dem Drahtloskommunikationsmodul ausgesendet werden und auch keine Drahtloskommunikationsverbindung zur Übertragung der Zählerdaten oder zeitkritischen Daten vorliegt, befinden sich der Zähler sowie das Drahtloskommunikationsmodul jeweils in einem Sleep-Zustand (Ruhe-Modus).

Bei dem Zähler bzw. dem Drahtloskommunikationsmodul handelt es sich um solche, die ortsfest installiert sind.

Vorzugsweise werden in einem Netzwerk zeitkritische Daten einer Mehrzahl von Zählern an ein oder mehrere Drahtloskommunikationsmodule des Netzwerks übertragen.

Was den Nahbereichs-Funkstandard anbelangt, so handelt es sich hierbei um einen Funkstandard, mit dem sich ein Zähler mit einem Drahtloskommunikationsmodul in einer Umgebung von maximal 20 Metern vernetzen lassen. Vorzugsweise handelt es sich bei dem Nahbereichs-Funkstandard um den BLE (Bluetooth Low Energy)-Nahbereichs-Funkstandard.

Gemäß einer zweckmäßigen Ausgestaltung werden die zeitkritischen Daten, die das Drahtloskommunikationsmodul von dem jeweiligen Zähler empfangen hat, an ein entferntes Head-End weiter übertragen.

Zweckmäßigerweise erfolgt die Übertragung der zeitkritischen Daten vom Drahtloskommunikationsmodul an das Head-End auf WAN-Basis.

### Beschreibung der Erfindung anhand von Ausführungsbeispielen

Zweckmäßige Ausgestaltungen der vorliegenden Erfindung werden nachfolgend unter Bezugnahmen auf Zeichnungsfiguren näher erläutert. Es zeigen:

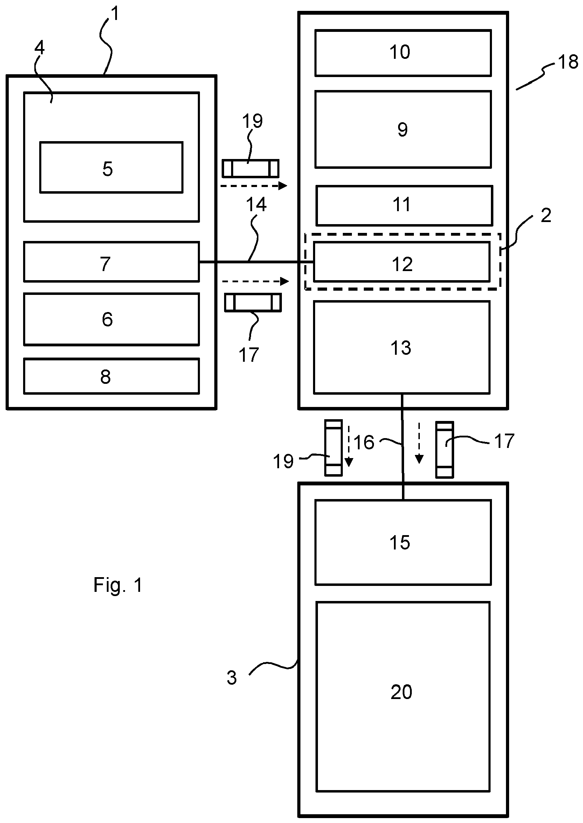

- Fig. 1: eine stark vereinfachte schematische Darstellung eines Zählers, eines Drahtloskommunikationsmoduls sowie eines Head-Ends;
- Fig. 2: eine stark vereinfachte schematische Übersicht einer ersten Ausgestaltung des erfindungsgemäßen Verfahrens;
- Fig. 3: eine stark vereinfachte schematische Übersicht einer zweiten Ausgestaltung des erfindungsgemäßen Verfahrens;
- Fig.4: eine stark vereinfachte schematische Ablauffolge der Übertragung zeitkritischer Daten gemäß der Ausgestaltung des Verfahrens nach Fig. 2; sowie
- Fig. 5: eine stark vereinfachte schematische Ablauffolge der Übertragung zeitkritischer Daten gemäß der Ausgestaltung des Verfahrens nach Fig. 3.

Bezugsziffer 1 kennzeichnet einen Zähler, vorzugsweise einen Verbrauchszähler, welcher üblicherweise ortsfest in einem Gebäude installiert ist und dazu vorgesehen ist, Zählerdaten 17, z. B. Verbrauchsdaten für unterschiedliche Versorgungsarten, wie z.B. Strom, Kaltwasser, Warmwasser, Wärme, Gas usw. zu generieren. Anstelle von Verbrauchsdaten oder zusätzlich zu Verbrauchsdaten können die Zählerdaten 17 auch Zustandsdaten, wie z.B. die Temperatur, die Wasserqualität, Wasserhärte, Einsatzdauer usw. erfassen. Je nach Anwendung 4 werden diese Daten im Zähler 1 erfasst und in dessen Speicher 5 abgelegt.

Zur Ablaufsteuerung umfasst der Zähler 1 ferner einen Mikroprozessor 6. Der Zähler 1 umfasst ferner zur Energieversorgung eine Batterie 8.

Üblicherweise sind in einem Gebäude eine Mehrzahl von Zählern 1 in einem Erfassungsnetzwerk zusammengefasst. Die Zähler 1 sind hierbei an unterschiedlichen Stellen im Gebäude positioniert und jeweils mit einer eigenen Batterie ausgestattet.

Um die Zählerdaten 17 eines Zählers 1 "einzusammeln" ist ein sogenannter Datensammler 18 vorgesehen, welcher üblicherweise ebenfalls in dem Gebäude in der Nähe des oder der Zähler 1 ortsfest installiert sein kann und ebenfalls über einen Speicher 10, einen Mikroprozessor 9 sowie eine Batterie 11 verfügt.

Für eine drahtlose Übertragung der Zählerdaten 17 vom Zähler 1 zum Datensammler 18 umfasst der Zähler 1 ein Funk-Interface 7 und der Datensammler 18 ein Drahtloskommunikationsmodul 2, vorzugsweise ein sogenanntes Radio-Network-Adapter(RNA)-Modul, welches ebenfalls Funk-Interface 12 aufweist. Beide Funk-Interfaces 7, 12 ermöglichen eine Funkverbindung 14, die in einem Nahbereichs-Funkstandard arbeitet, wodurch z. B. im Vergleich zu einem Mobilfunkstandard ein wesentlich niedrigerer Energieverbrauch gewährleistet ist.

Es handelt sich hierbei insbesondere um einen Funkstandard, mit dem sich der Zähler 1 mit dem Drahtloskommunikationsmodul 2 in einer Umgebung von ca. maximal 20 Metern vernetzen kann. Besonders vorteilhaft hierzu ist der sogenannte BLE-Standard (Bluetooth Low Energy Nahbereichs-Funkstandard). Ein derartiger Nahbereichs-Funkstandard ermöglicht es, mit vergleichsweise geringem Energieverbrauch mittels des Datensammlers 18 Zählerdaten 17 an unterschiedlichen Stellen innerhalb eines Gebäudes energieeffizient und mit ausreichender Informationsdichte auszulesen.

Mittels der Nahbereichs-Funkübertragung wird ein Modularkonzept geschaffen, bei dem ein oder mehrere Zähler 1 mit einem oder mehreren Drahtloskommunikationsmodulen 2 eines oder mehrerer Datensammler 18 zur Übertragung der Zählerdaten 17 gekoppelt werden können.

Die von dem Datensammler 18 ausgelesenen Zählerdaten 17 werden von diesem weiter an ein ortsentferntes Head-End 3 übertragen, in dem sich eine Datenbank 20 zur Verwaltung und Auswertung der Zählerdaten 17 einer Vielzahl von Verbrauchern befindet. Üblicherweise wird das Head-End 3 von einem Versorgungsunternehmen (Energieversorger, Wasserversorger, Wärmeversorger usw.) betrieben und/oder verwaltet.

Für den Betreiber der Datenbank 20 des Head-Ends 3 sind neben den Zählerdaten 17 auch zeitkritische Daten 19 mehr und mehr von Interesse, die im Bereich des jeweiligen Zählers 1 unverhofft, also plötzlich auftreten. Unter einem zeitkritischen Ereignis wird insbesondere ein Ereignis verstanden, welches Anlass für eine Alarmauslösung geben kann, beispielsweise ein Manipulationsversuch an einem Zähler, eine sich plötzlich einstellende Situationsveränderung in Bezug auf die Versorgungsart, wie beispielsweise ein Wasserrohrbruch oder eine anderweitige Störung am Zähler und/oder am Versorgungsnetzwerk an sich. Derartige zeitkritische Ereignisse können sehr vielfältig sein. Sie erfordern jedoch stets eine möglich zeitnahe Erfassung, um ein rasches Handeln zu ermöglichen oder dies zumindest entsprechend zeitzugeordnet dokumentieren zu können.

Die Übertragung der Zählerdaten 17 zu dem Head-End 3 erfolgt auf WAN-Verbindung 16 (Wide Area Network Verbindung) mit einem entsprechenden WAN-Interface 13 bzw. WAN-Access-Point. Bei einem WAN-Netzwerk handelt es sich um ein Netzwerk, welches einen großen geografischen Bereich abdeckt, insbesondere um Netze, die von Providern und Telekommunikationsanbietern unterhalten und betrieben werden.

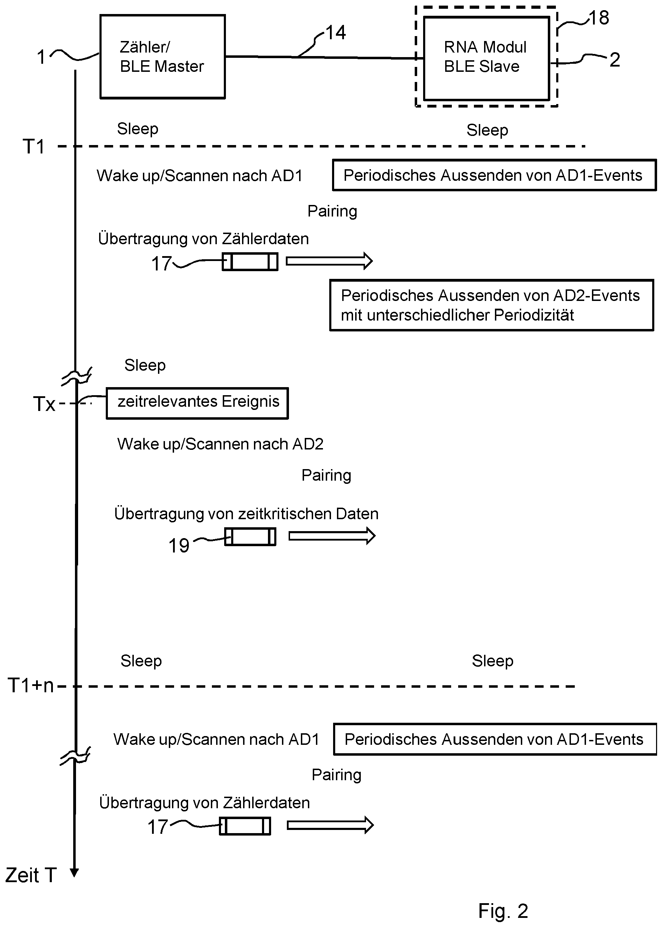

In Fig. 2 wird eine Ausgestaltung des Verfahrens zum drahtlosen Übertragen von zeitkritischen Daten 19, insbesondere Alarmdaten, vom Zähler 1 auf das Drahtloskommunikationsmodul 2 (RNA-Modul) des Datensammlers 18 beschrieben, wobei in diesem Fall als Nahbereichs-Funkstandard, vorzugsweise der BLE-Funkstandard, zum Einsatz kommt. Der Zähler 1 agiert hierbei als BLE-Master und das Drahtloskommunikationsmodul 2 als BLE-Slave.

Im Rahmen des Verfahrens werden vordefinierte Zustände im Zähler 1 festgelegt, bei deren Eintritt im Zähler 1 ein zeitkritisches Ereignis bzw. ein Alarm initialisiert wird. Hierzu werden zeitkritische Daten 19 bzw. Alarmdaten im Zähler 1 in dessen Anwendung 4 erzeugt.

Der Zähler 1 und das Drahtloskommunikationsmodul 2 werden zu Beginn einmalig gekoppelt, sodass sich Zähler 1 und Drahtloskommunikationsmodul 2 im Netzwerk "kennen". Hierbei erfolgt die Festlegung einer Identifizierung, Authentifizierung und eine Verschlüsselung des Drahtloskommunikationskanals zwischen den beiden konkreten Teilnehmern.

Während des Einsatzes ist zur Reduzierung des Leistungsverbrauchs der Kommunikationskanal zwischen Zähler 1 und dem Drahtloskommunikationsmodul 2 inaktiv. Zähler 1 sowie Drahtloskommunikationsmodul 2 befinden sich in einem Sleep-Zustand. Die Funk-Interfaces 7, 12 sind während dieser Zeitspanne ausgeschaltet.

In fest vorgegeben Zeitabständen, z.B. alle 15 Minuten, wachen beide zeitgleich auf (Wake up). Im Rahmen des Aufbaus der Kommunikation nimmt der Zähler 1 als BLE-Master eine zuhörende Rolle ein (Scannen nach AD1), wohingegen das Drahtloskommunikationsmodul 2 als BLE-Slave erste Advertising Events AD1 periodisch aussendet. Sobald der Zähler 1 die ersten Advertising Events AD1 empfängt, wird die Verbindung zwischen Zähler 1 und Drahtloskommunikationsmodul 2 aufgebaut (Pairing). Anschließend werden die Zählerdaten 17 vom Zähler 1 an das Drahtloskommunikationsmodul 2 über die Funkverbindung 14 übertragen. Danach geht der Zähler 1 wieder in den Ruhe-Modus (Sleep) über.

Gemäß dem Konzept der Erfindung werden danach vom Drahtloskommunikationsmodul 2 weitere d. h. zweite Advertising Events AD2 übertragen. Diese zweite Advertising Events AD2 werden im Vergleich zu den ersten Advertising Events AD1 in sehr kurzen zeitlichen Abständen versendet, beispielsweise im Minutentakt.

Der Zähler 1 kennt die Periodizität der zweiten Advertising Events AD2 und interpretiert diese als "Aufforderung" zur Übertragung von zeitkritischen Daten 19. Beim Eintritt eines zeitkritischen Ereignisses zum Zeitpunkt Tx wird dieses im Zähler festgestellt. In diesem Fall schaltet der Zähler 1 sein Funk-Interface 7 ein und scannt nach zweiten Advertising Events AD2. Sobald er diese empfangen hat, wird zwischen Zähler 1 und dem Drahtloskommunikationsmodul 2 eine Verbindung aufgebaut (Pairing), worauf zeitkritische Daten 19 in Zusammenhang mit dem zeitkritischen Ereignis über die Funkverbindung 14 im Nahbereichs-Funkstandard an das Drahtloskommunikationsmodul 2 übertragen werden.

Sollte während des Zeitraums des periodischen Aussendens der zweiten Advertising Events AD2 beim Zähler 1 kein zeitkritisches Ereignis vorliegen also keine Reaktion des Zählers erfolgen, geht das Drahtloskommunikationsmodul 2 wieder in den Ruhe-Modus (Sleep) über. Das Funk-Interface 7 des Zählers 1 braucht somit nur dann eingeschaltet, wenn sich ein zeitkritisches Ereignis beim Zähler 1 einstellt. Hierdurch kann der Stromverbrauch auf Seiten des Zählers 1 sowie auch des Drahtloskommunikationsmoduls 2 deutlich reduziert werden.

Der Verbindungsaufbau und Datenaustausch erfolgen gemäß den Nahbereichs-Funkstandard-spezifischen Abläufen.

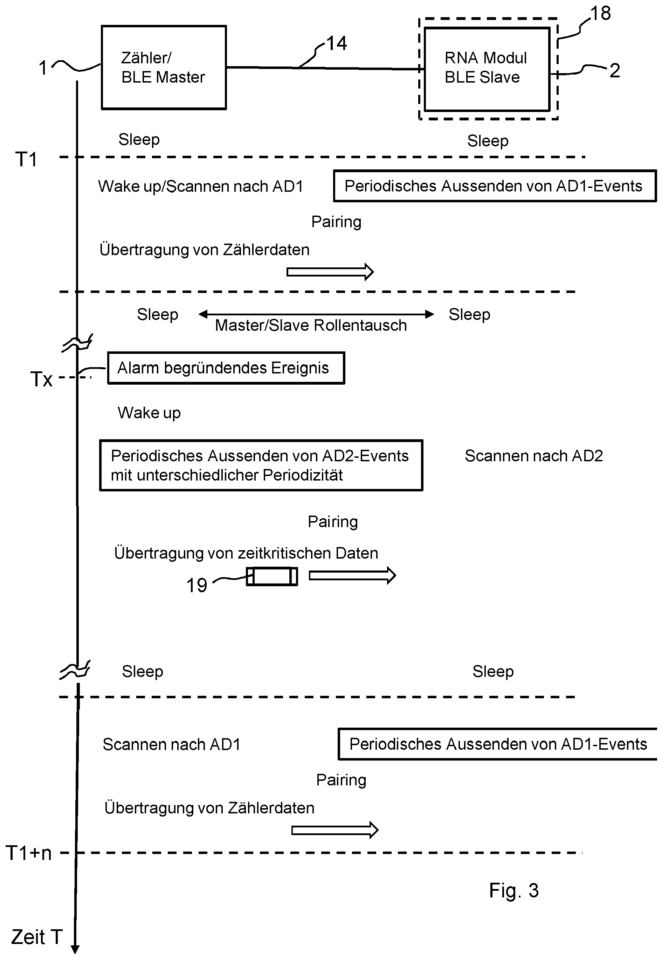

Bei der alternativen Ausgestaltung gemäß Fig. 3 findet zwischen den Datenaustauschintervallen T1 bzw. T1+n ein Rollentausch zwischen Zähler 1 und Drahtloskommunikationsmodul 2 statt. Der Zähler 1 wird zum BLE-Slave und das Drahtloskommunikationsmodul 2 wird zum BLE-Master. Das Drahtloskommunikationsmodul 2 scannt in periodisch kurzen, vordefinierten Zeitabständen nach zweiten Advertising Events AD2 vom Zähler 1. Im Zähler 1 sind diese Zeitabstände bekannt. Erst nach dem Eintreten eines zeitkritischen Ereignisses Tx wacht der Zähler 1 auf und beginnt damit, zweite Advertising Events AD2 zu versenden. Diese werden vom Drahtloskommunikationsmodul 2 empfangen. Daraufhin wird eine Drahtloskommunikation aufgebaut (Pairing), bei der die zeitkritischen Daten 19 vom Zähler 1 an das Drahtloskommunikationsmodul 2 über die Funkverbindung 14 übertragen werden. Anschließend wird die Verbindung beendet und Zähler 1 sowie Drahtloskommunikationsmodul 2 gehen wieder in den Ruhe-Modus (Sleep) über.

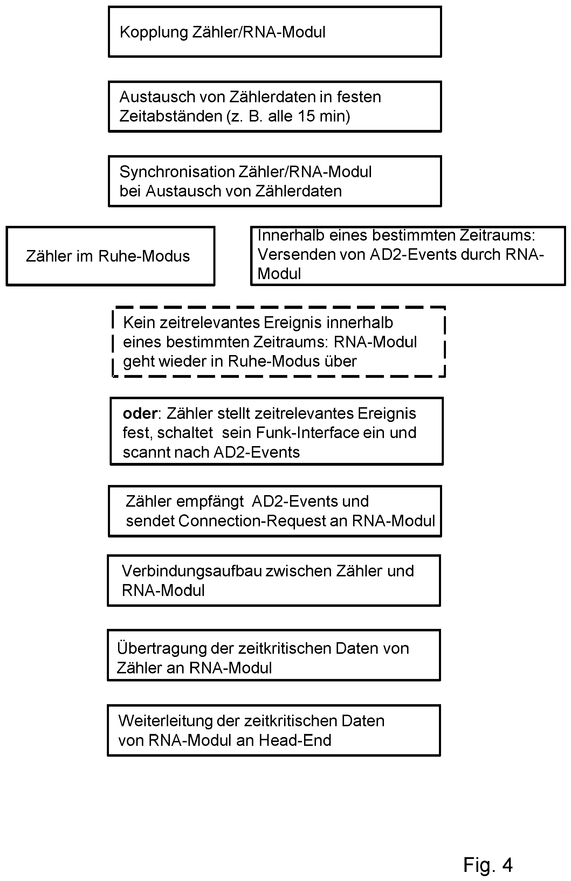

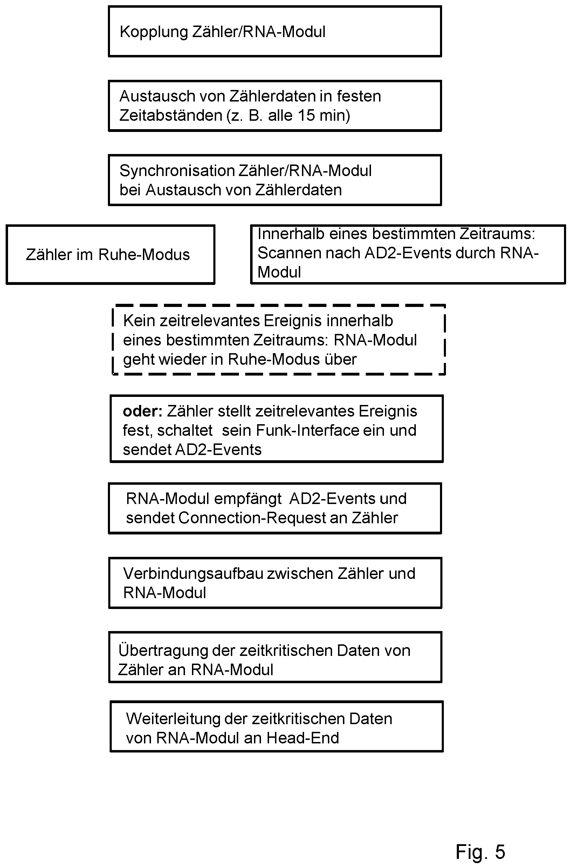

Den beiden alternativen Verfahrensweisen gemäß Fig. 2 und 3 gemeinsam ist jeweils eine vorherige Kopplung des Zählers 1 bzw. der Zähler mit dem Drahtloskommunikationsmodul 2 bzw. RNA-Modul sowie des Austausches von Zählerdaten in fest vorgegebenen Zeitabständen, vgl. Fig. 4 und 5. Ebenfalls gemeinsam ist eine Synchronisation des Zählers 1 mit dem Drahtloskommunikationsmodul 2 bzw. RNA-Modul beim Austausch der Zählerdaten. Daraus erkennt der Zähler 1, wann er mit dem Scannen beginnen muss, um zweite Advertising Events AD2 vom Drahtloskommunikationsmodul 2 sicher zu empfangen.

Diese zweiten Advertising Events AD2 werden innerhalb eines bestimmten Zeitraums vom Drahtloskommunikationsmodul 2 versendet. Ergibt sich kein zeitrelevantes Ereignis innerhalb eines bestimmten Zeitraums bzw. innerhalb des Zeitraums des Versendens der zweiten Advertising Events AD2 geht das Drahtloskommunikationsmodul 2 bzw. RNA-Modul wieder in den Ruhe-Modus über.

Stellt der Zähler 1 demgegenüber ein zeitrelevantes Ereignis fest, schaltet er sein Funk-Interface 7 ein und scannt nach den zweiten Advertising Events AD2. Den Zeitpunkt des Absendens kennt er aufgrund der vorgenannten Synchronisation. Sobald der Zähler 1 ein zweites Advertising Event AD2 empfangen hat, sendet er einen Connection-Request an das Drahtloskommunikationsmodul 2, woraufhin eine Drahtloskommunikationsverbindung zwischen Zähler 1 und Drahtloskommunikationsmodul 2 bzw. RNA-Modul aufgebaut wird. Im Rahmen dieser Verbindung werden zeitkritische Daten 19 vom Zähler 1 an das Drahtloskommunikationsmodul 2 übertragen. Von dort können die zeitkritischen Daten 19 per WAN weiter an das Head-End 3 übertragen werden.

Der in Fig. 5 beschriebene Verfahrensablauf entspricht der alternativen Ausgestaltung gemäß Fig. 3, bei der aufgrund des Rollentausches zwischen Zähler 1 und Drahtloskommunikationsmodul 2 beim Eintritt eines zeitrelevanten Ereignisses der Zähler 1 sein Funk-Interface 7 einschaltet und zweite Advertising Events AD2 aussendet, die das Drahtloskommunikationsmodul 2 bzw. das RNA-Modul empfängt und entsprechend einen Connection-Request an den Zähler 1 sendet. Der Aufbau des Drahtloskommunikationskanals sowie die Weiterleitung der Daten an das Head-End 3 gleicht der vorbeschriebenen Ausgestaltung.

Aufgrund der Synchronisation kennt das Drahtloskommunikationsmodul 2 bzw. RNA-Modul die Sendezeitpunkte der zweiten Advertising Events AD2 des Zählers 1.

### BEZUGSZEICHENLISTE

- 1: Zähler
- 2: Drahtloskommunikationsmodul
- 3: Head-End
- 4: Anwendung
- 5: Speicher
- 6: Mikroprozessor
- 7: Funk-Interface
- 8: Batterie
- 9: Prozessor
- 10: Speicher
- 11: Batterie
- 12: Funk-Interface
- 13: WAN-Interface
- 14: Funkverbindung
- 15: WAN-Interface
- 16: WAN-Verbindung
- 17: Zählerdaten
- 18: Datensammler
- 19: zeitkritische Daten
- 20: Datenbank

- T1: Datenaustauschintervall
- T1+n: Datenaustauschintervall
- AD1: erste Advertising Events
- AD2: zweite Advertising Events

## Patentansprüche

1. Verfahren zum drahtlosen Übertragen von zeitkritischen Daten (19), insbesondere Alarmdaten, eines batteriebetriebenen Zählers (1), vorzugsweise Verbrauchszählers, zu einem vorzugsweise ebenfalls batteriebetriebenen Drahtloskommunikationsmodul (2) in einem Nahbereichs-Funkstandard, bei dem der Zähler (1) sowie das Drahtloskommunikationsmodul (2) als Master bzw. Slave oder umgekehrt agieren,
wobei Zähler (1) sowie Drahtloskommunikationsmodul (2) vorher gekoppelt worden sind,
wobei vom Zähler (1) an das Drahtloskommunikationsmodul (2) Zählerdaten (17) über eine Drahtloskommunikationsverbindung gesendet werden,
wobei die Zählerdaten (17) sich von den zeitkritischen Daten (19) unterscheiden,
wobei zum Senden der Zählerdaten (17) und zeitkritischen Daten (19) vom Zähler (1) an das Drahtloskommunikationsmodul (2) eine aktive Verbindung zwischen Zähler (1) und Drahtloskommunikationsmodul (2) aufgebaut wird,
wobei für die Einleitung eines Kommunikationsaufbaus zum Übertragen der Zählerdaten (17) erste Advertising Events (AD1) gesendet werden, und
für die Einleitung eines Kommunikationsaufbaus zum Übertragen der zeitkritischen Daten (19) zweite Advertising Events (AD2) gesendet werden, **dadurch gekennzeichnet, dass**
das Drahtloskommunikationsmodul (2) als Slave agiert, die zweiten Advertising Events (AD2) vom Drahtloskommunikationsmodul (2) als Slave ausgesendet werden und der Zähler (1) bei Eintreten eines zeitkritischen Ereignisses als Master damit beginnt, zum Aufbau einer Drahtloskommunikationsverbindung zwischen Zähler (1) und Drahtloskommunikationsmodul (2) nach den zweiten Advertising Events (AD2) zu scannen oder
das Drahtloskommunikationsmodul (2) als Slave agiert, für den Aufbau der Drahtloskommunikationsverbindung zur Übertragung von zeitkritischen Daten ein Rollentausch zwischen Zähler und Drahtloskommunikationsmodul stattfindet, bei dem das Drahtloskommunikationsmodul (2) als Master nach den zweiten Advertising Events (AD2) scannt, und bei Eintreten eines zeitkritischen Ereignisses beim Zähler (1) zweite Advertising Events (AD2) zum Aufbau einer Drahtloskommunikationsverbindung zwischen Zähler (1) und Drahtloskommunikationsmodul (2) vom Zähler (1) als Slave ausgesendet werden.

2. Verfahren nach Anspruch 1, **dadurch gekennzeichnet, dass** die zweiten Advertising Events (AD2) periodisch ausgesendet werden.

3. Verfahren nach Anspruch 1 oder 2, **dadurch gekennzeichnet, dass** die Periodizität der zweiten Advertising Events (AD2) höher ist als diejenige der ersten Advertising Events (AD1).

4. Verfahren nach mindestens einem der vorhergehenden Ansprüche, **dadurch gekennzeichnet, dass** die zweiten Advertising Events (AD2) lediglich über einen vordefinierten Zeitraum ausgesendet werden.

5. Verfahren nach Anspruch 4, **dadurch gekennzeichnet, dass** die Einleitung des Kommunikationsaufbaus zum Übertragen der Zählerdaten (17) zu fest vorgegebenen Zeitpunkten (Tn, Tn+1) erfolgt.

6. Verfahren nach Anspruch 5, **dadurch gekennzeichnet, dass** das Aussenden der zweiten Advertising Events (AD2) zwischen den fest vorgegebenen Zeitpunkten (Tn, Tn+1) innerhalb festgelegter Zeitintervallen erfolgt.

7. Verfahren nach mindestens einem der vorhergehenden Ansprüche, **dadurch gekennzeichnet, dass** sich Zähler (1) und Drahtloskommunikationsmodul (2) bezüglich des Aussendens bzw. Empfangs der zweiten Advertising Events (AD2), vorzugsweise bei jedem Kommunikationsaufbau zum Übertragen der Zählerdaten (17), gegenseitig synchronisieren.

8. Verfahren nach mindestens einem der vorhergehenden Ansprüche,
**dadurch gekennzeichnet, dass** sich der Zähler (1) vor dem zeitlichen Einsetzen der zweiten Advertising Events (AD2) in einem Sleep/Listen-Zustand und das Drahtloskommunikationsmodul (2) in einem Ruhe-Modus befindet oder umgekehrt.

9. Verfahren nach mindestens einem der vorhergehenden Ansprüche,
**dadurch gekennzeichnet, dass** Zähler (1) und/oder Drahtloskommunikationsmodul (2) ortsfest installiert ist bzw. sind.

10. Verfahren nach mindestens einem der vorhergehenden Ansprüche,
**dadurch gekennzeichnet, dass** in einem Netzwerk zeitkritische Daten (19) mehrerer Zähler (1) an ein oder mehrere Drahtloskommunikationsmodul(e) (2) übertragen werden.

11. Verfahren nach mindestens einem der vorhergehenden Ansprüche,
**dadurch gekennzeichnet, dass** es sich bei dem Nahbereichs-Funkstandard um den BLE-Nahbereichs-Funkstandard handelt.

12. Verfahren nach mindestens einem der vorhergehenden Ansprüche,
**dadurch gekennzeichnet, dass** die zeitkritischen Daten (19) des Zählers (1) vom Drahtloskommunikationsmodul (2) an ein Head-End (3) übertragen werden.

13. Verfahren nach Anspruch 12,
**dadurch gekennzeichnet, dass** die Übertragung der zeitkritischen Daten (19) per WAN-Technik erfolgt.

## Claims

1. Method for wireless transmission of time-critical data (19), in particular alarm data, from a battery-operated meter (1), preferably a consumption meter, to a preferably likewise battery-operated wireless communication module (2) in a short-range wireless standard, in which the meter (1) and the wireless communication module (2) act as master or slave, or vice versa,
wherein meter (1) and wireless communication module (2) have been coupled in advance,
wherein meter data (17) is sent from the meter (1) to the wireless communication module (2) via a wireless communication link,
wherein the meter data (17) differs from the time-critical data (19),
wherein for the purpose of sending the meter data (17) and time-critical data (19) from the meter (1) to the wireless communication module (2), an active link is established between meter (1) and wireless communication module (2),
wherein first advertising events (AD1) are sent in order to initiate establishing communication for the purpose of transmitting the meter data (17), and
second advertising events (AD2) are sent in order to initiate establishing communication for the purpose of transmitting the time-critical data (19),
**characterized in that**
the wireless communication module (2) acts as slave, the second advertising events (AD2) are sent out by the wireless communication module (2) as slave, and, when a time-critical incident occurs, the meter (1) as master starts to scan for the second advertising events (AD2) in order to establish a wireless communication link between meter (1) and wireless communication module (2), or
the wireless communication module (2) acts as slave, a role swap between meter and wireless communication module takes place for the purpose of establishing the wireless communication link for transmitting time-critical data, during which role swap the wireless communication module (2) as master scans for the second advertising events (AD2), and, when a time-critical incident occurs at the meter (1), second advertising events (AD2) are sent out in order to establish a wireless communication link between meter (1) and wireless communication module (2).

2. Method according to Claim 1, **characterized in that** the second advertising events (AD2) are sent out periodically.

3. Method according to Claim 1 or 2, **characterized in that** the periodicity of the second advertising events (AD2) is higher than that of the first advertising events (AD1) .

4. Method according to at least one of the preceding claims, **characterized in that** the second advertising events (AD2) are sent out only over a predefined time period.

5. Method according to Claim 4, **characterized in that** establishing communication for the purpose of transmitting the meter data (17) is initiated at fixed times (Tn, Tn+1).

6. Method according to Claim 5, **characterized in that** the second advertising events (AD2) are sent out between the fixed times (Tn, Tn+1) within defined time intervals.

7. Method according to at least one of the preceding claims, **characterized in that** meter (1) and wireless communication module (2) synchronize with each other with regard to the sending-out and/or receiving of the second advertising events (AD2), preferably whenever communication is established for transmission of the meter data (17).

8. Method according to at least one of the preceding claims, **characterized in that,** before the timed use of the second advertising events (AD2), the meter (1) is in a sleep/listening state, and the wireless communication module (2) is in an idle mode, or vice versa.

9. Method according to at least one of the preceding claims, **characterized in that** meter (1) and/or wireless communication module (2) is/are installed in a fixed position.

10. Method according to at least one of the preceding claims, **characterized in that,** in a network, time-critical data (19) from a plurality of meters (1) is transmitted to one or more wireless communication modules (2) .

11. Method according to at least one of the preceding claims, **characterized in that** the short-range wireless standard is the BLE short-range wireless standard.

12. Method according to at least one of the preceding claims, **characterized in that** the time-critical data (19) from the meter (1) is transmitted from the wireless communication module (2) to a head-end (3).

13. Method according to Claim 12, **characterized in that** the time-critical data (19) is transmitted by WAN technology.

## Revendications

1. Procédé de transmission sans fil de données (19) temporellement critiques, en particulier de données d'alarme, d'un compteur (1) fonctionnant sur batterie, de préférence d'un compteur de consommation, à un module de communication sans fil (2) de préférence fonctionnant également sur batterie dans une norme radioélectrique à courte portée, procédé dans lequel le compteur (1) et le module de communication sans fil (2) agissent en maître respectivement en esclave ou inversement,
le compteur (1) et le module de communication sans fil (2) ayant été préalablement couplés,
des données de compteur (17) étant envoyées du compteur (1) au module de communication sans fil (2) sur une liaison de communication sans fil,
les données de compteur (17) se distinguant des données (19) temporellement critiques,
une liaison active étant établie entre le compteur (1) et le module de communication sans fil (2) afin d'envoyer les données de compteur (17) et les données (19) temporellement critiques du compteur (1) au module de communication sans fil (2),
des premiers événements publicitaires (AD1) étant envoyés afin de lancer une configuration de communication destinée à transmettre les données de compteur (17), et
des deuxièmes événements publicitaires (AD2) étant envoyés afin de lancer une configuration de communication destinée à transmettre les données (19) temporellement critiques, **caractérisé en ce que**
le module de communication sans fil (2) agit en esclave, les deuxièmes événements publicitaires (AD2) sont envoyés par le module de communication sans fil (2) agissant en esclave, et le compteur (1), agissant en maître lorsqu'un événement temporellement critique se produit, commence à effectuer un balayage pour rechercher les deuxièmes événements publicitaires (AD2) afin d'établir une liaison de communication sans fil entre le compteur (1) et le module de communication sans fil (2), ou
le module de communication sans fil (2) agit en esclave pour établir la liaison de communication sans fil destinée à transmettre des données temporellement critique, une inversion de rôle est effectuée entre le compteur et le module de communication sans fil lors de laquelle le module de communication sans fil (2) agissant en maître effectue un balayage pour rechercher les deuxièmes événements publicitaires (AD2) et, lorsqu'un événement temporellement critique survient auprès du compteur (1), des deuxièmes événements publicitaires (AD2) sont envoyés par compteur (1) agissant en esclave pour établir une liaison de communication sans fil entre le compteur (1) et le module de communication sans fil (2).

2. Procédé selon la revendication 1, **caractérisé en ce que** les deuxièmes événements publicitaires (AD2) sont envoyés périodiquement.

3. Procédé selon la revendication 1 ou 2, **caractérisé en ce que** la périodicité des deuxièmes événements publicitaires (AD2) est supérieure à celle des premiers événements publicitaires (AD1).

4. Procédé selon l'une au moins des revendications précédentes, **caractérisé en ce que** les deuxièmes événements publicitaires (AD2) ne sont envoyés que sur un intervalle de temps prédéfini.

5. Procédé selon la revendication 4, **caractérisé en ce que** le lancement de l'établissement de la communication destinée à transmettre des données de compteur (17) est effectué à des instants fixes spécifiés (Tn, Tn+1).

6. Procédé selon la revendication 5, **caractérisé en ce que** l'envoi des deuxièmes événements publicitaires (AD2) est effectué entre les instants fixes spécifiés (Tn, Tn+1) dans des intervalles de temps fixes.

7. Procédé selon l'une au moins des revendications précédentes, **caractérisé en ce que** le compteur (1) et le module de communication sans fil (2) se synchronisent l'un avec l'autre en ce qui concerne l'envoi ou la réception des deuxièmes événements publicitaires (AD2), de préférence à chaque établissement de communication destinée à transmettre les données de compteur (17).

8. Procédé selon l'une au moins des revendications précédentes, **caractérisé en ce que**, avant le début des deuxièmes événements publicitaires (AD2), le compteur (1) se trouve dans un état de veille/écoute et le module de communication sans fil (2) se trouve dans un mode de repos ou inversement.

9. Procédé selon l'une au moins des revendications précédentes, **caractérisé en ce que** le compteur (1) et/ou le module de communication sans fil (2) sont installés de manière fixe.

10. Procédé selon l'une au moins des revendications précédentes, **caractérisé en ce que** les données (19) temporellement critiques de plusieurs compteurs (1) sont transmises à un ou plusieurs modules de communication sans fil (2) dans un réseau.

11. Procédé selon l'une au moins des revendications précédentes, **caractérisé en ce que** la norme radioélectrique à courte portée est la norme radioélectrique à courte portée BLE.

12. Procédé selon l'une au moins des revendications précédentes, **caractérisé en ce que** les données (19) temporellement critiques du compteur (1) sont transmises du module de communication sans fil (2) à une tête de réseau (3).

13. Procédé selon la revendication 12, **caractérisé en ce que** la transmission des données (19) temporellement critiques est effectuée par la technologie WAN.
